# EUROPEAN PATENT SPECIFICATION

(11) **EP 4 118 964 B1**
(45) Date of publication and mention of the grant of the patent: **27.09.2023**
(21) Application number: 21717949.8
(22) Date of filing: 03.03.2021
(51) Int. Cl.: A01M 1/20

(54) **DELAYED-RELEASE DISPENSER OF A CHEMICAL SUBSTANCE**
SPENDER FÜR EINE CHEMISCHE SUBSTANZ MIT VERZÖGERTER FREISETZUNG
DISTRIBUTEUR DE SUBSTANCE CHIMIQUE À LIBÉRATION RETARDÉE

(30) Priority: 12.03.2020 ES 202030208
(43) Date of publication of application: 18.01.2023
(73) Proprietor: SAN JUAN MARTÍN, José Miguel, 39300 Torrelavega - Cantabria (ES)
(72) Inventor: SAN JUAN MARTÍN, José Miguel, 39300 Torrelavega - Cantabria (ES)
(74) Representative: Clarke, Modet y Cía., S.L.
(86) International application number: PCT/ES2021/070154
(87) International publication number: WO 2021/180989

(56) References cited:
- FR-A1- 3 025 978
- JP-A- 2019 503 996
- US-A1- 2018 125 053

## Description

### Field of the invention

The present invention belongs to the technical field of entomology, specifically to social flying insects, and more specifically to means for controlling and eliminating said insects. State of the art relating to this technical field are for example: US 2018/125053 A1, JP 2019 503996 A, FR 3 025 978 A1.

### Background of the invention

Despite the great importance for the environment and the ecological balance of certain social flying insects, such as wasps, the high proliferation thereof in certain environments can be detrimental for certain species, including other insects, such as bees, or even for human beings, due to the danger the stings thereof have, especially for those persons with allergies.

Wasps are social insects which live in communities made up of hundreds or even thousands of individuals in the nest thereof, or a wasp nest. Wasp nests increase in size as the population thereof increases, mainly in summer, and they are usually located in trees, bushes and sometimes underground. These wasp nests usually have a single entrance and at night-time all the wasps are located in it.

Currently, certain methods are known for destroying wasp nests which affect populated areas, such as, for example, burning the wasp nest, or trying to flood it with water. Alternatively, the wasps are usually driven away with smoke. All these systems have the problem of not being totally efficient and, furthermore, need proximity to the wasp nest in order to use them, which puts the safety of the operator at risk, and the need to have expensive protective equipment in order to prevent serious risks of many wasp stings. Furthermore, these systems generate residues and waste such as smoke and different burned substances, which are harmful to the surroundings of the wasp nest.

Another solution currently used is the use of insecticides, which have the problem of being highly toxic both for other species of animals and for plants and for human beings.

As an alternative solution to the previous ones, document FR3025978A1 shows a device for reducing the population of Asian hornets, which has an adhesive layer, a waterproof layer and an insecticide support. This device is designed to be arranged on the back of the hornet, and acts via contact, ingestion or inhalation by other hornets. This system has the problem that the insect becomes unstable with the weight and cannot fly, not being able to transport the insecticide to the wasp nest. Furthermore, with the configuration of the device, the insecticide is exposed, and can come into contact with insects or other unwanted animals or plants, in addition to the fact that it will probably come off on the way and will not reach the wasp nest in order to act there.

Therefore, a system for eliminating wasps and other harmful flying insects in certain environments by means of a dispenser of a chemical substance is desirable, avoiding the existing drawbacks in the previous systems of the state of the art.

### Description of the invention

The present invention solves the problems existing in the state of the art by means of a delayed-release dispenser of a chemical substance for eliminating social flying insects, such as wasps.

The dispenser has a capsule or tablet which stores and releases a chemical substance housed therein, and delaying means for delaying the release of the chemical substance, so that the chemical substance is not released immediately, but rather after a time has passed, once the insect has flown to the nest thereof, a wasp nest in the case of wasps. In this manner, the release of the substance inside the wasp nest will be ensured, thus affecting the entire population thereof. The dispenser additionally has securing means for securing the capsule to the insect, in particular to the wasp.

The delaying means have a plug in the capsule, which is made of a moistened material configured to maintain a certain volume, closing the capsule by means of said volume and thus preventing the outlet of the chemical substance housed therein while it remains moistened. Furthermore, the material of the plug is configured to decrease in volume as it dries, such that the capsule is opened, thus enabling the outlet of the chemical substance therefrom. Thus, the present dispenser is designed to be hung on the wasps after capturing them during the day and to activate at night-time once the wasps have returned to the nest, causing the collapse of the entire community.

In this manner, the capsule with the chemical substance is secured to the wasp by means of the securing means, and it is freed at sunset. The wasp flies to the wasp nest thereof in order to spend the night with the rest of the swarm. The plug of the capsule formed by a hydrated material keeps the capsule closed while the moisture level thereof is maintained. After a few hours, while the wasp is inside the nest, the plug dries and when it loses volume, it is freed, opening the capsule and releasing the chemical substance inside the wasp nest, which causes the desired effect depending on the chemical substance used, thus achieving the elimination of the population of the wasp nest.

The chemical substance can be a biocide, insecticide, pheromone, among others, as well as any other substance which significantly affects the wasp population from inside the wasp nest.

Preferably, the securing means of the dispenser are such that they support the capsule hanging under the insect.

Furthermore, according to different particular embodiments of the invention, the securing means can have filaments, elastic elements, hooks, clips, adhesive means and a combination thereof.

This dispenser has numerous advantages over the means known from the state of the art. First, it is not necessary to know the location of the wasp nest in order to destroy it, since the wasps themselves will be responsible for carrying the substance to it. From a single point, an area within a radius of approximately one kilometre can be treated, since this is the approximate distance that the wasps usually move away from their nest. Thus, by following a suitable strategy, the dispenser object of the present invention has the potential to eradicate the desired species from a certain area, unlike the existing systems in the state of the art, which only slow down the advance of the population in a limited manner.

Furthermore, wasps can carry up to 80% of their weight, for which reason any type of chemical substance which is useful in fighting against wasps can be used in quite high quantities.

By means of the present dispenser, the attack is very selective against the desired species, since it attacks from inside the nest. Furthermore, the dispenser is environmentally-friendly since it minimises the amount of product to be used.

### Brief description of the drawings

In order to make the invention more readily understandable, by way of illustration and not limitation, an embodiment of the invention that refers to a series of figures is described below.
Figure 1 shows an embodiment of the dispenser of a chemical substance object of the present invention.
Figure 2 shows the dispenser of figure 1 secured to a wasp.
Figures 3a, 3b, 3c and 3d show four exemplary embodiments of the dispenser object of the invention with different securing means.

These figures refer to a set of elements which are:
1. dispenser
2. capsule
3. chemical substance
4. securing means
5. insect
6. base of the capsule
7. plug
8. filaments
9 elastic elements
10 hooks

### Detailed description of the invention

The object of the present invention is a delayed-release dispenser 1 of a chemical substance 3, for eliminating social flying insects 5.

As seen in the figures, the dispenser 1 has a capsule 2 or tablet stored therein in order to subsequently release a chemical substance 3, together with delaying means for delaying the release of the chemical substance 3, which act so that the chemical substance 3 is not released immediately, but rather after a time has passed, once the insect 5 has returned to the nest thereof, a wasp nest in the case of wasps. Thus, the chemical substance 3 will be released inside the wasp nest, thus affecting the entire population thereof. This delay in the release of the chemical substance is up to several hours, in order to ensure that the insect 5 reaches the nest thereof. The dispenser 1 additionally has securing means for securing the capsule 2 to the insect 5.

In the present invention, the delaying means have a plug 7 in the capsule 2, preferably in the lower portion of the capsule 2, although it can be arranged in any other position. This plug 7 is made of a moistened material configured to maintain a certain volume, closing the capsule 2 by means of said volume, and thus preventing the outlet of the chemical substance 3 housed therein while it remains moistened. Furthermore, the material of the plug 7 is configured to decrease in volume as it dries, such that the capsule 2 is opened, thus enabling the outlet of the chemical substance 3 therefrom. In this manner, the dispenser can be secured to a wasp after capturing it, and subsequently releasing it in order for it to return to the nest thereof. On the way back to the nest, while the plug 7 remains moistened, it will close the capsule, preventing the outlet of the chemical substance. After a time has passed, once the wasp 5 has returned to the nest thereof, the material of the plug 7 will dry, and thus decrease in volume. This will cause the opening of the capsule 2, releasing the chemical substance which is housed inside the wasp nest, affecting the entire population thereof.

The chemical substance 3 can be a biocide, insecticide, pheromone, among others, as well as any other which can significantly eliminate the wasp 5 population from inside the wasp nest.

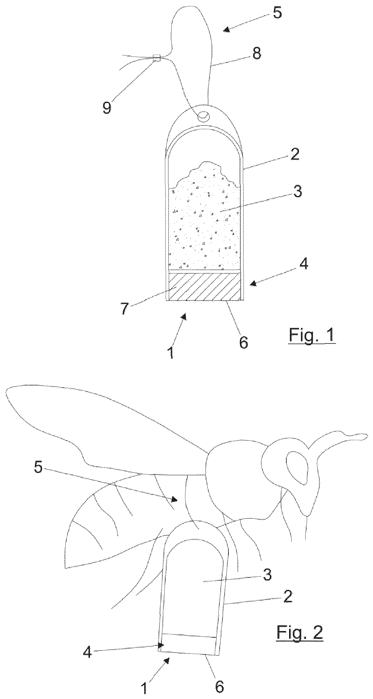

Preferably, the securing means 4 of the dispenser 1 support the capsule 2 hanging under the insect 5, as seen in figure 2.

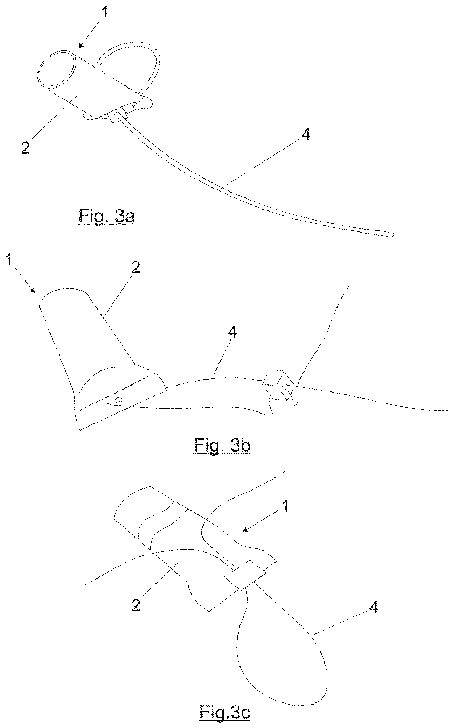

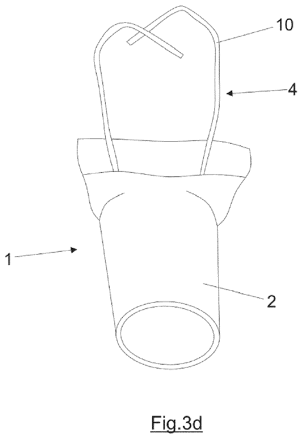

Furthermore, according to different particular embodiments of the invention shown in figures 3a-3d, the securing means 4 can have filaments 8, elastic elements 9, clips, adhesive means and a combination thereof. Preferably, as seen in figure 3d, the securing means 4 have elastic hooks 10, which can be deformed and recover the original shape thereof in order to adapt to the body of the insect 5.

## Claims

1. A delayed-release dispenser of a chemical substance, for eliminating social flying insects (5), comprising
- a capsule (2) configured to release
- a chemical substance (3) housed therein,
- delaying means for delaying the release of the chemical substance (3),
- and securing means (4) configured to secure the capsule (2) to an insect (5),
**characterised in that** the delaying means comprise a plug (7) arranged in the capsule (2), said plug (7) made of a moistened material configured to maintain a certain volume, closing the capsule (2) and preventing the outlet of the chemical substance (3) while it remains moistened, and decrease in volume, enabling the outlet of the chemical substance (3) from the capsule as it dries.

2. The delayed-release dispenser of a chemical substance according to the preceding claim, wherein the chemical substance (3) is selected from biocide, insecticide and pheromone.

3. The delayed-release dispenser of a chemical substance according to any of the preceding claims, wherein the securing means (4) are configured to secure the capsule (2) hanging under the insect (5).

4. The delayed-release dispenser of a chemical substance according to any of the preceding claims, wherein the securing means (5) are selected from filaments (8), elastic elements (9), hooks (10), clips, adhesive means and a combination thereof.

## Patentansprüche

1. Spender mit verzögerter Freisetzung einer chemischen Substanz zum Beseitigen von Fluginsekten (5), umfassend
- eine zur Freisetzung konfigurierte Kapsel (2)
- eine darin aufgenommene chemische Substanz (3),
- Verzögerungsmittel zum Verzögern der Freisetzung der chemischen Substanz (3),
- und Befestigungsmittel (4), die konfiguriert sind, um die Kapsel (2) an einem Insekt (5) zu befestigen,
**dadurch gekennzeichnet, dass** die Verzögerungsmittel einen in der Kapsel (2) angeordneten Stopfen (7) umfassen, wobei der Stopfen (7) aus einem angefeuchteten Material besteht, das konfiguriert ist, um ein bestimmtes Volumen aufrechtzuerhalten, die Kapsel (2) verschließt und den Austritt der chemischen Substanz (3) verhindert, und an Volumen abnimmt, sodass die chemische Substanz (3) während des Trocknens aus der Kapsel austreten kann.

2. Spender mit verzögerter Freisetzung einer chemischen Substanz nach dem vorhergehenden Anspruch, wobei die chemische Substanz (3) aus Biozid, Insektizid und Pheromon ausgewählt ist.

3. Spender mit verzögerter Freisetzung einer chemischen Substanz nach einem der vorhergehenden Ansprüche, wobei die Befestigungsmittel (4) konfiguriert sind, um die unter dem Insekt (5) hängende Kapsel (2) zu befestigen.

4. Spender mit verzögerter Freisetzung einer chemischen Substanz nach einem der vorhergehenden Ansprüche, wobei die Befestigungsmittel (5) aus Fäden (8), elastischen Elementen (9), Haken (10), Klammern, Klebemitteln und einer Kombination davon ausgewählt sind.

## Revendications

1. Diffuseur à libération retardée d'une substance chimique, pour l'élimination d'insectes volants sociaux (5), comprenant
- une capsule (2) configurée pour libérer
- une substance chimique (3) logée dans celle-ci,
- des moyens de retardement pour le retardement de la libération de la substance chimique (3),
- et des moyens de fixation (4) configurés pour fixer la capsule (2) à un insecte (5),
**caractérisé en ce que** les moyens de retardement comprennent un bouchon (7) agencé dans la capsule (2), ledit bouchon (7) fait d'un matériau humidifié configuré pour conserver un certain volume, fermant la capsule (2) et empêchant la sortie de la substance chimique (3) tant qu'il reste humidifié, et diminuer de volume, permettant la sortie de la substance chimique (3) de la capsule à mesure qu'il sèche.

2. Diffuseur à libération retardée d'une substance chimique selon la revendication précédente, dans lequel la substance chimique (3) est choisie parmi un biocide, un insecticide et un phéromone.

3. Diffuseur à libération retardée d'une substance chimique selon l'une quelconque des revendications précédentes, dans lequel les moyens de fixation (4) sont configurés pour fixer la capsule (2) suspendue sous l'insecte (5).

4. Diffuseur à libération retardée d'une substance chimique selon l'une quelconque des revendications précédentes, dans lequel les moyens de fixation (5) sont choisis parmi des filaments (8), des éléments élastiques (9), des crochets (10), des pinces, des moyens adhésifs et une combinaison de ceux-ci.
